# EUROPÄISCHE PATENTSCHRIFT

(11) **EP 1 392 549 B1**
(45) Veröffentlichungstag und Bekanntmachung des Hinweises auf die Patenterteilung: **30.03.2005**
(21) Anmeldenummer: 02754622.5
(22) Anmeldetag: 05.06.2002
(51) Int. Cl.: B60R 16/02

(54) **ABDICHTEINRICHTUNG EINER LEITUNGSVERBINDUNG**
SEALING DEVICE OF A CABLE CONNECTION
DISPOSITIF D'ETANCHEITE D'UNE CONNEXION DE LIGNE DE JONCTION

(30) Priorität: 08.06.2001 DE 10127688
(43) Veröffentlichungstag der Anmeldung: 03.03.2004
(73) Patentinhaber: RICHARD FRITZ GMBH + CO. KG, 74354 Besigheim (DE)
(72) Erfinder: BROSS, Alexander, 74906 Bad Rappenau (DE)
(74) Vertreter: Kastner, Hermann, Dipl.-Ing.
(86) Internationale Anmeldenummer: PCT/EP2002/006119
(87) Internationale Veröffentlichungsnummer: WO 2002/101897

(56) Entgegenhaltungen:
- EP-A- 0 891 897
- FR-A- 2 735 835
- US-A- 5 280 134
- US-A- 5 487 680

## Beschreibung

Bei Kraftfahrzeugen müssen häufig zwischen der Karosserie und den Fahrzeugtüren Verbindungsleitungen verlegt werden, die nach außen hin, d.h. gegenüber der Umgebung, abgedichtet sein müssen. Außerdem müssen die Verbindungsleitungen an den Durchtrittsstellen gegenüber der Karosserie und der Tür abgedichtet sein. Zu diesem Zweck wird der betreffende Abschnitt der Verbindungsleitung zwischen der Karosserie und der Tür von einem Faltenbalg umgeben. Dieser Faltenbalg wiederum muss gegenüber der Karosserie und der Tür abgedichtet sein. Diese beiden relativ zueinander bewegbaren Teile werden im Folgenden zusammenfassend gemeinsam als Bauteil bezeichnet.

Bei bekannten Leitungsverbindungen sind zum Zwecke der Abdichtung die Endabschnitte des Faltenbalges mit einer umlaufenden Rille versehen, deren Rillengrund eine Umrisslinie hat, die auf die Umrisslinie der Durchlassöffnung im Bauteil abgestimmt ist. Diese Umrisslinie ist in der Regel entweder kreisförmig oder langrund. Die Rille wird beiderseits durch ein Wulstteil begrenzt, die je eine Rillenwand bilden.

Der Endabschnitt des Faltenbalges wird an der Durchlassöffnung gewissermaßen eingeknüpft, indem der an die Rille anschließende äußere Teil des Endabschnittes elastisch zusammengedrückt wird und durch die Durchlassöffnung hindurch gesteckt wird. Nachdem der Endabschnitt sich entspannt hat, liegt jeder der beiden Wulstteile an dem ihm zugekehrten Randbereich der Durchlassöffnung am Bauteil an. Außerdem liegt die Grundfläche der Rille mehr oder weniger eng an der inneren Randfläche der Durchlassöffnung an.

Diese bekannte Abdichteinrichtung hat den großen Nachteil, dass sie unter elastischer Verformung, zumindest eines Teils des Endabschnittes des Faltenbalges, an der Durchlassöffnung eingeknüpft werden muss. Das sind zeitaufwändige und sehr umständliche Arbeitsvorgänge, die sich nicht automatisieren lassen. Die Dichtheit einer solchen Abdichteinrichtung hängt sehr stark von den Fertigungstoleranzen der miteinander zu verbindenden Teile ab. Wenn zum Beispiel der Abstand der Rillenwände größer als die Dicke des Bauteils ist, ist zumindest die axiale Anlage der Rillenwände am Bauteil und damit die Dichtwirkung der Abdichteinrichtung in Frage gestellt. Ähnliches gilt für die radiale Anlage des Rillengrundes an der inneren Randfläche der Durchlassöffnung. Wenn die Durchlassöffnung eine Umrisslinie hat, die größer als diejenige des Rillengrundes ist, liegt der Endabschnitt des Faltenbalges nicht an der inneren Randfläche der Durchlassöffnung des Bauteils an. In besonders ungünstigen Fällen können beide Mängel gleichzeitig auftreten, wodurch überhaupt keine Dichtwirkung mehr erreicht wird.

Um die Schwierigkeiten mit dem Einknüpfen des Endabschnittes zu verringern, ist es bekannt, den Endabschnitt des Faltenbalges mit nur einer axial ausgerichteten Anlagefläche an einem umlaufenden Wulstteil zu versehen und Halteelemente, etwa in Form von Halteclipsen, anzubringen, die nach dem Durchschieben des Endabschnittes des Faltenbalges sich auf der Rückseite des Bauteils aufspreizen,, gewissermaßen hinter dem Randabschnitt der Durchlassöffnung einhaken, und so den Endabschnitt des Faltenbalges in der Durchlassöffnung festhalten. Bei dieser Abdichteinrichtung liegt in der Regel der an die axiale Anlagefläche des Endabschnittes anschließende Umfangsfläche des Faltenbalges nicht an der inneren Randfläche der Durchlassöffnung an. Die Abdichtung des Faltenbalges erfolgt ausschließlich durch die axiale Anlagefläche. An dieser ist manchmal noch eine umlaufende, axial ausgerichtete Dichtlippe angeformt. Bei dieser Abdichteinrichtung gibt es jedenfalls keine radiale Abdichtung. Die axiale Dichtwirkung hängt wiederum von den Fertigungstoleranzen der zusammenwirkenden Teile ab.

Der größte Nachteil ist die mangelhafte Parallelität der Anlagefläche des Endabschnittes einerseits und des Randabschnittes des Bauteils andererseits. Der Randabschnitt des Bauteils kann in Umfangsrichtung sehr wellig sein.

Ein weiterer Nachteil dieser Abdichteinrichtung liegt darin, dass Maßabweichungen zwischen der Dicke des Bauteils und dem Abstand zwischen der Anlagefläche des Endabschnittes des Faltenbalges und der Anlagefläche der Halteclipse auftreten können, die ebenfalls eine dichte Anlage der Anlagefläche des Faltenbalges am Bauteil verhindern können.

Eine derartige Abdichteinrichtung ist aus der US-5,280,134-A bekannt. Ihr Faltenbalg weist lediglich eine umlaufende Dichtlippe auf, die an der Stirnseite des Bauteils in axialer Richtung anliegt. Der Endabschnitt des Faltenbalges ist mit einem umlaufenden flanschartigen Gehäuse verbunden, das sich durch die Durchlassöffnung des Bauteils hindurch erstreckt und dort an zwei einander gegenüber liegenden Umfangsstellen je eine Ausnehmung aufweist. Darin ist ein keilförmiger Riegelkörper mittels eines Biegegelenkes in der Weise schwenkbar angeordnet, dass er beim Einführen des flanschartigen Gehäuses in die Durchlassöffnung des Bauteils radial einwärts ausweicht und danach wieder in seine Ausgangsstellung zurückkehrt. Mittels eines axial verschiebbaren Nockenpaares werden beide Riegelkörper weiter nach außen verschwenkt, so dass ihre Rückenfläche sich am Randbereich der Durchlassöffnung des Bauteils anlegt und dadurch den Faltenbalg am Bauteil verriegelt. Wegen der großen Toleranzen aller Bauteile ist eine dichte Anlage der umlaufenden Dichtlippe des Faltenbalges an dem Bauteil schwer zu erreichen. Eine in radialer Richtung wirkende Abdichtung ist nicht vorhanden, schon gar nicht eine mit einem radialen Spreizvorgang.

Der Erfindung liegt die Aufgabe zugrunde, eine Abdichteinrichtung einer Leitungsverbindung zwischen zwei relativ zueinander bewegbaren Bauteilen, insbesondere einer Karosserie und einer Tür, zu schaffen, bei der nach dem Zusammenfügen der Teile eine bessere Dichtwirkung als bei den bekannten Abdichteinrichtungen gewährleistet ist. Diese Aufgabe wird durch eine Abdichteinrichtung mit den Merkmalen des Anspruches 1 gelöst.

Dadurch, dass an dem Schutzschlauch der Verbindungsleitung ein Schlauchkopf vorhanden ist, der einen in Umfangsrichtung ringförmig in sich geschlossenen Wandabschnitt aufweist, der eine nach außen gerichtete umlaufende Dichtungsfläche aufweist, deren äußere Umrisslinie auf die Umrisslinie der Durchgangsöffnung abgestimmt ist, und dadurch, dass im Schlauchkopf eine Spreizvorrichtung mit äußeren Anlageflächen für den Wandabschnitt mit der Dichtungsfläche vorhanden ist, und dadurch, dass ein Betätigungskörper vorhanden ist, mittels dessen die Spreizvorrichtung aktiviert werden kann, kann nach dem Einsetzen des Schlauchkopfes in die Durchlassöffnung des Bauteils der Wandabschnitt des Schlauchkopfes mit der Dichtungsfläche unter Ausnutzung seiner Elastizität an der inneren Randfläche der Durchlassöffnung angedrückt werden. So kann eine sehr gute Abdichtung zwischen dem Schlauchkopf und dem Bauteil erreicht werden. Diese ist weitgehend unabhängig von den üblichen Fertigungstoleranzen der miteinander zusammenwirkenden Teile.

Bei einer Ausgestaltung nach Anspruch 2 wird die innere Randfläche der Durchlassöffnung merklich vergrößert, so dass bei vorgegebener Spreizkraft der Spreizvorrichtung die Dichtfläche des Schlauchkopfes weniger stark beansprucht wird und dadurch.die Dauerhaftigkeit der Verbindung und der Dichtheit verbessert wird.

Bei einer Ausgestaltung nach Anspruch 3 wird ein Anschlag für den Schlauchkopf geschaffen, der bei der Montage der Abdichteinrichtung automatisch, d. h. ohne Zutun des Montagepersonals, für die richtige Positionierung des ersten Wandabschnittes mit der Dichtungsfläche in der Ebene des Bauteils sorgt. Außerdem bildet der Flanschteil eine gewisse Sperre gegen das Vordringen von Schmutzteilen und von größeren Wassermengen bis zur eigentlichen Dichtungsstelle. Das wird durch eine umlaufende Dichtlippe am Flanschteil noch unterstützt.

Bei einer Ausgestaltung nach Anspruch 4 wird die Spreizvorrichtung bereits beim Zusammenfügen der Teile in die richtige Position in der Ebene des Wandabschnittes mit der Dichtungsfläche gebracht und außerdem dort auch festgehalten, wenn der Betätigungskörper relativ zur Spreizvorrichtung bewegt wird. Mit einer Weiterbildung nach Anspruch 5 wird ein besonders stabiler Anschlagkörper geschaffen, der auch für eine verwindungsfreie Ausrichtung der Spreizvorrichtung sorgt. Durch die geschlossene Ringform ist der Anschlagkörper besonders widerstandsfähig. Der auf den ringförmigen Anschlagkörper abgestimmte Wandabschnitt des Schlauchkopfes sorgt, ohne weiteres Zutun, für die richtige Positionierung des Anschlagkörpers und damit auch der Spreizvorrichtung.

Durch die Ausgestaltung nach Anspruch 6 wird der Anschlagkörper auch in rückwärtiger Richtung fest gehalten, so dass er seine richtige Position stets beibehält.

Bei einer Ausgestaltung nach Anspruch 7 sorgt der zweite Flanschteil des Schlauchkopfes dafür, dass die in den Schlauchkopf eingesetzten Teile der Abdichteinrichtung auch in Vorwärtsrichtung festgehalten werden, so dass sie ihre richtige Position stets beibehalten.

Bei einer Ausgestaltung nach Anspruch 8 wird eine sehr einfach gestaltete Spreizvorrichtung geschaffen, die vor allem für kleinere Spreizwege geeignet ist.

Durch eine Ausgestaltung nach Anspruch 9 wird eine Spreizvorrichtung geschaffen, die auch größere Spreizwege ausführen kann und damit größere Toleranzen der Umrisslinie der Durchlassöffnung des Bauteils leichter überbrücken kann.

Bei einer Ausgestaltung nach Anspruch 10 lassen sich beim Auseinanderspreizen der Spreizelemente die zwischen ihnen in Umfangsrichtung auftretenden Lücken überbrücken, so dass im aufgespreizten Zustand der Spreizvorrichtung die Summe der Auflageflächen für den Wandabschnitt mit der Dichtungsfläche praktisch lückenlos ist.

Durch eine Ausgestaltung nach Anspruch 11 wird ein elastisches Zwischenglied zwischen der Spreizvorrichtung und dem Wandabschnitt mit der Dichtungsfläche eingefügt, mittels dessen es noch besser gelingt, Fertigungstoleranzen der miteinander zusammen wirkenden Teile, insbesondere des Bauteils und seiner Durchlassöffnung, auszugleichen und damit die Qualität der Abdichtung zu verbessern.

Bei einer Ausgestaltung nach Anspruch 12 wird beim Aktivieren der Abdichteinrichtung diese zugleich am Bauteil verriegelt, so dass damit auch der Schlauchkopf und der Schutzschlauch insgesamt am Bauteil fest verankert sind. Bei einer Weiterbildung nach Anspruch 13 oder 14 ist es möglich, bei Bedarf die Verriegelung der Abdichteinrichtung am Bauteil wieder zu lösen, etwa um nach einer Beschädigung der Verbindungsleitung und/oder des Schutzschlauches diese Teile wieder herzustellen oder auszutauschen.

Bei einer Ausgestaltung nach Anspruch 15 ist kein gesondertes Betätigungsteil erforderlich, weil dafür der ohnehin vorhandene Stecker eingesetzt werden kann.

Bei einer Ausgestaltung nach Anspruch 16 können die miteinander zusammenwirkenden Teile der Abdichteinrichtung gegeneinander verriegelt werden, so dass ein unbeabsichtigtes Lösen der Abdichteinrichtung und damit des Schlauchkopfes der Verbindungsleitung praktisch ausgeschlossen ist.

Im folgenden wird die Erfindung anhand eines in der Zeichnung dargestellten Ausführungsbeispieles näher erläutert.
Es zeigen:
- Fig. 1: eine Seitenansicht eines Steckers einer Verbindungsleitung mit einem Schutzschlauch und einer Abdichteinrichtung gemäß der Erfindung;
- Fig. 2: eine teilweise geschnitten dargestellte Seitenansicht des Schutzschlauches;
- Fig. 3 und 4: je einen ausschnittweise dargestellten Längsschnitt der Abdichteinrichtung nach der Schnittverlaufslinie A - A in Fig. 1, in der Ausgangsstellung bzw. der Betriebstellung der Teile;
- Fig. 5: einen Querschnitt der Abdichteinrichtung nach der Schnittverlaufslinie B - B in Fig. 1, in der - Betriebsstellung entsprechend Fig. 4;
- Fig. 6: eine perspektivische Ansicht einer Baueinheit aus Spreizvorrichtung und Anschlagkörper der Abdichteinrichtung;
- Fig. 7 bis 9: eine Seitenansicht bzw. eine Stirnansicht bzw. eine Untersicht der Baueinheit nach Fig. 6;
- Fig. 10: eine perspektivische Ansicht eines Steckerkörpers und zugleich eines Betätigungskörpers der Abdichteinrichtung;
- Fig. 11 bis 13: eine Seitenansicht bzw. eine Stirnansicht bzw. eine Untersicht des Steckerkörpers und Betätigungskörpers nach Fig. 10;
- Fig. 14 und 15: je einen ausschnittweise dargestellten Längsschnitt der Abdichteinrichtung nach der Schnittverlaufslinie C - C in Fig. 1, in der Ausgangsstellung bzw. der Betriebstellung der Teile.

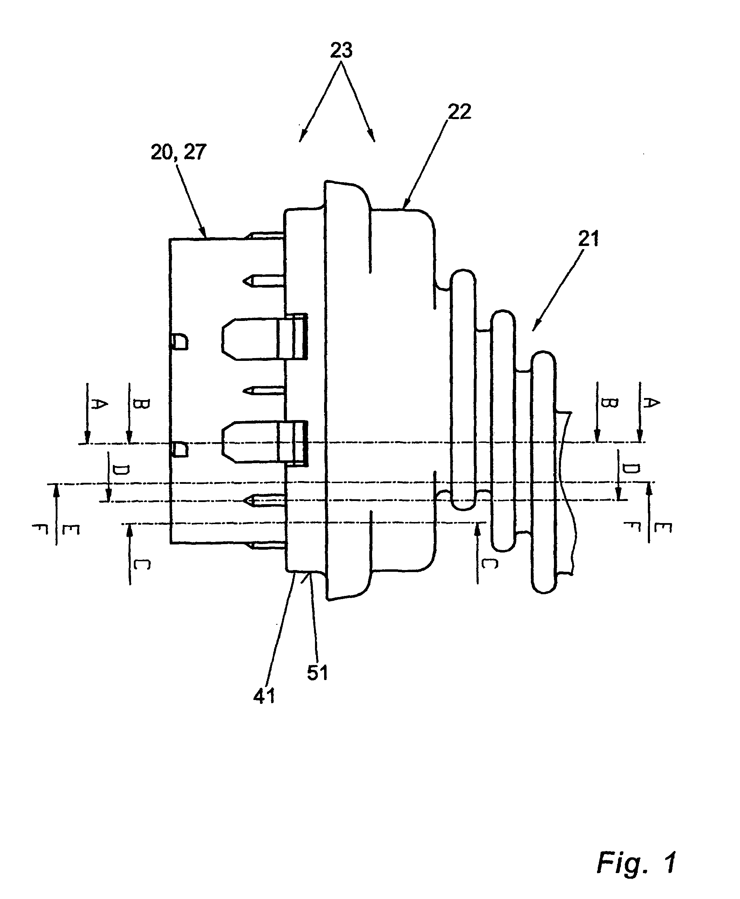

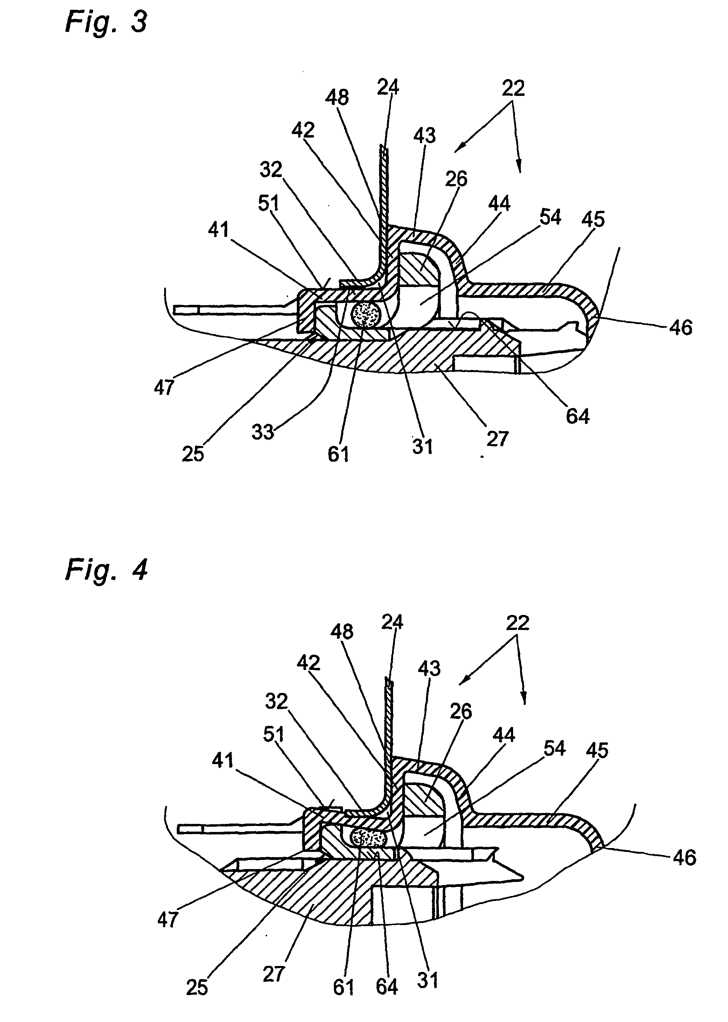

Aus Fig. 1 ist ein Stecker 20 zu ersehen, der an eine nicht sichtbare Verbindungsleitung angeschlossen ist, die von einem Schutzschlauch 21 umgeben ist und daher nicht sichtbar ist. Der Schutzschlauch 21 geht an seinem Ende in einen Schlauchkopf 22 über, der Teil einer Abdichteinrichtung 23 ist (Fig. 3 und Fig. 4). Diese sorgt für den wasserdichten Anschluss der Verbindungsleitung an einem Bauteil 24, das relativ zu einem anderen Bauteil bewegbar ist, an dem das andere Ende der Verbindungsleitung auf gleiche oder ähnliche Weise angeschlossen ist. Da der Schlauchkopf 22 ein Teil des Schutzschlauches 21 ist, wird zur besseren Unterscheidung dieser Teile der Schutzschlauch 21 im engeren Sinne des Wortes im folgenden auch als Mittelteil des Schutzschlauches 21 bezeichnet.

Die Hauptbaugruppen oder -teile der Abdichteinrichtung 23 sind der Schlauchkopf 22, eine Spreizvorrichtung 25, ein Anschlagkörper 26, ein Betätigungskörper 27 sowie zwei Verriegelungsvorrichtungen 28 und 29.

Das Bauteil 24 ist beispielsweise eine Wand der Karosserie oder einer Tür eines Kraftfahrzeuges. Das Bauteil 24 weist eine Durchlassöffnung 31 für die Verbindungsleitung auf. Die Durchlassöffnung 31 hat eine bestimmte Umrisslinie, die im allgemeinen einen kreisrunden oder einen langrunden Verlauf hat. Entlang der Umrisslinie seiner Durchlassöffnung 31 ist das Bauteil 24 zweckmäßigerweise mit einem durch einen Tiefziehvorgang erzeugten Ziehrand 32 versehen. Dessen Innenseite ist zumindest annähernd rechtwinklig zum Randbereich der Durchlassöffnung 31 ausgerichtet und bildet eine innere Randfläche 33, die eine bestimmte axiale Erstreckung hat. Im einfachsten Falle kann die Durchlassöffnung auch durch einen einfachen Stanzvorgang erzeugt werden, deren innere Randfläche dann nur eine axiale Erstreckung hat, die gleich der Dicke des Bauteils ist. Das wäre jedoch für die Abdichteinrichtung 23 weniger günstig.

Der Schutzschlauch 21 ist nach Art einer Wellmembran ausgebildet, um ihm eine möglichst große Flexibilität zu verschaffen. Sein Schlauchkopf 22 ist selbst ein Teil der Abdichteinrichtung 23. Darüber hinaus nimmt er noch weitere Teile der Abdichteinrichtung auf.

Am Schlauchkopf 22 kann man mehrere Wandabschnitte unterscheiden, die unterschiedliche Funktionen haben. Diese Wandabschnitte erstrecken sich teils in zumindest näherungsweise axialer Richtung und teils in zumindest näherungsweise, radiale Richtung. Sie sind in Umfangsrichtung ringförmig in sich geschlossen und schließen in axialer Richtung aneinander an.

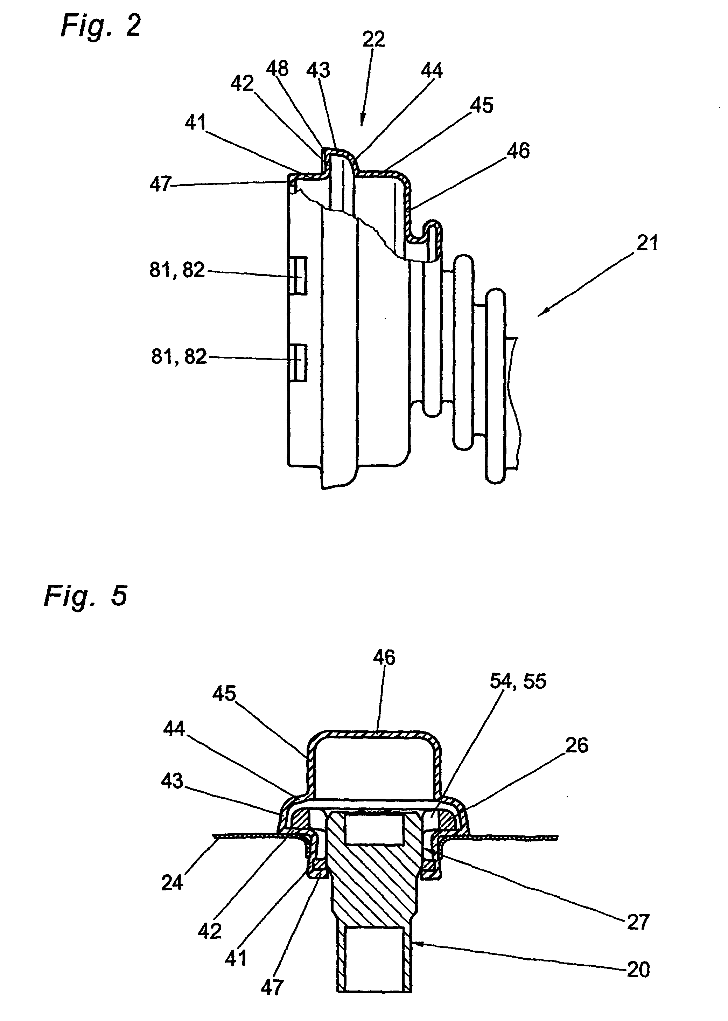

Wie aus Fig. 2 ersichtlich ist, ist der am freien Ende des Schlauchkopfes 22 beginnende erste Wandabschnitt 41 axial ausgerichtet. Daran schließt der zweite Wandabschnitt 42 an, der sich vom ersten Wandabschnitt 41 aus radial auswärts erstreckt. An dessen äußeren Rand schließt der dritte Wandabschnitt 43 an, der zumindest annähernd, axial ausgerichtet ist. Der daran anschließende vierte Wandabschnitt 44 ist zumindest näherungsweise radial einwärts gerichtet. Daran schließt der fünfte Wandabschnitt 45 an, der axial ausgerichtet ist. An ihn schließt sich der sechste Wandabschnitt 46 an, der wiederum radial einwärts gerichtet ist. An seinem inneren Rand schließt der Schutzschlauch 21 an. Am freien Ende des ersten Wandabschnittes 41 schließt ein siebter Wandabschnitt 47 an, der radial einwärts gerichtet ist. An der dem Bauteil 24 zugekehrten Seite des Flanschteils 42 ist entlang seinem Außenrand eine umlaufende Dichtlippe 48 angeformt, die im Randbereich der Durchlassöffnung 31 am Bauteil 24 anliegt.

Der erste Wandabschnitt 41 des Schlauchkopfes 22 wird im axialen Bereich der inneren Randfläche 33 der Durchlassöffnung 31 positioniert. Die axiale Erstreckung des Wandabschnittes 41 ist größer als die axiale Erstreckung der inneren Randfläche 33. Die äußere Umrisslinie des Wandabschnittes 41 ist auf die Umrisslinie der inneren Randfläche 33 derart abgestimmt, dass der erste Wandabschnitt 41 im Ausgangszustand oder Ruhezustand in die Durchlassöffnung 31 eingeschoben werden kann und er ringsum bis an die innere Randfläche 33 der Durchlassöffnung 31 heranreicht. Dieser Teil des Wandabschnittes 41 dient der Abdichteinrichtung als umlaufende Dichtungsfläche 51.

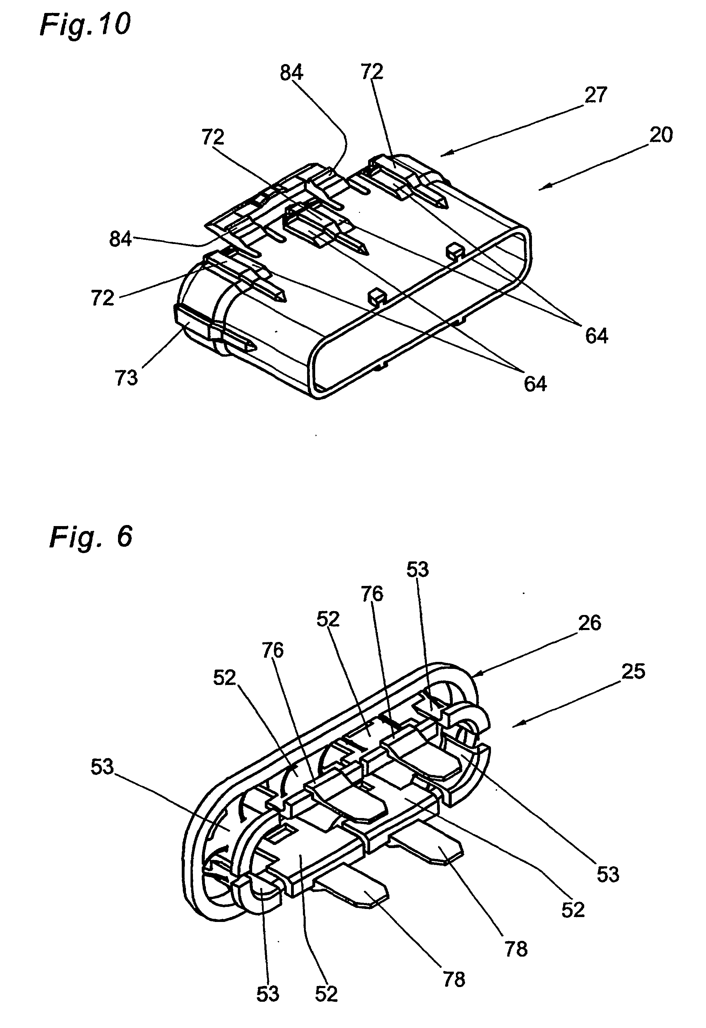

Im axialen Bereich der Dichtungsfläche 51 ist auf der Innenseite des ersten Wandabschnittes 41 die Spreizvorrichtung 25 angeordnet. Daneben ist im axialen Bereich des dritten Wandabschnittes 43 der Anschlagkörper 26 angeordnet. Er ist mit der Spreizvorrichtung 25 dauerhaft verbunden und bildet mit ihr gemeinsam eine Baueinheit (Fig. 6), die als Kunststoff-Formteil hergestellt wird.

Die Spreizvorrichtung weist mehrere in Umfangsrichtung nebeneinander angeordnete Spreizelemente 52 und 53 auf. Sie sind durch je ein Paar elastischer Verbindungsglieder 54 bzw. 55 mit dem Anschlagkörper 26 verbunden.

Die Verbindungsglieder 54 und 55 sind als flache und breite Blattfedern ausgebildet. Dadurch sind die Spreizelemente 52 und 53 zwar in radialer Richtung nachgiebig, in axialer Richtung jedoch unverschieblich mit dem Anschlagkörper 26 verbunden.

Entsprechend der langrunden Umrisslinie, sowohl der inneren Randfläche 33 der Durchlassöffnung 31 wie auch der Außenseite und der Innenseite des ersten Wandabschnittes 41, sind die Spreizelemente 52 an den Längsseiten gerade ausgebildet und die Spreizelemente 53 an den Schmalseiten bogenförmig gekrümmt.

Auf ihrer Außenseite weisen die Spreizelemente 52 eine äußere Anlagefläche 56 und die Spreizelemente 53 eine äußere Anlagefläche 57 auf. Auf ihrer Innenseite weisen die geraden Spreizelemente 52 eine innere Anlagefläche 58 und die gekrümmten Spreizelemente 53 eine innere Anlagefläche 59 auf.

Wie aus Fig. 3 und Fig. 4 ersichtlich ist, ist zwischen der Spreizvorrichtung 25 und dem ersten Wandabschnitt 41 des Schlauchkopfes 22 ein Druckkörper 61 angeordnet. Er ist ringförmig in sich geschlossen und aus einem elastischen Werkstoff hergestellt.

Die äußeren Anlageflächen 56 bzw. 57 der Spreizelemente 52 und 53 liegen an diesem Druckkörper 61 unmittelbar an, weshalb sie auf die Innenseite des ersten Wandabschnittes 41 nur mittelbar einwirken. Der Druckkörper 61, der auch als Polsterkörper bezeichnet werden könnte, trägt dazu bei, Toleranzen des Bauteils 24, des ersten Wandabschnittes 41, der Spreizvorrichtung 25 und der Betätigungsvorrichtung 27 auszugleichen und auch die unvermeidlichen Umfangslücken 62 zwischen je zwei einander benachbarten Spreizelementen 52 und/oder 53 zu überbrükken.

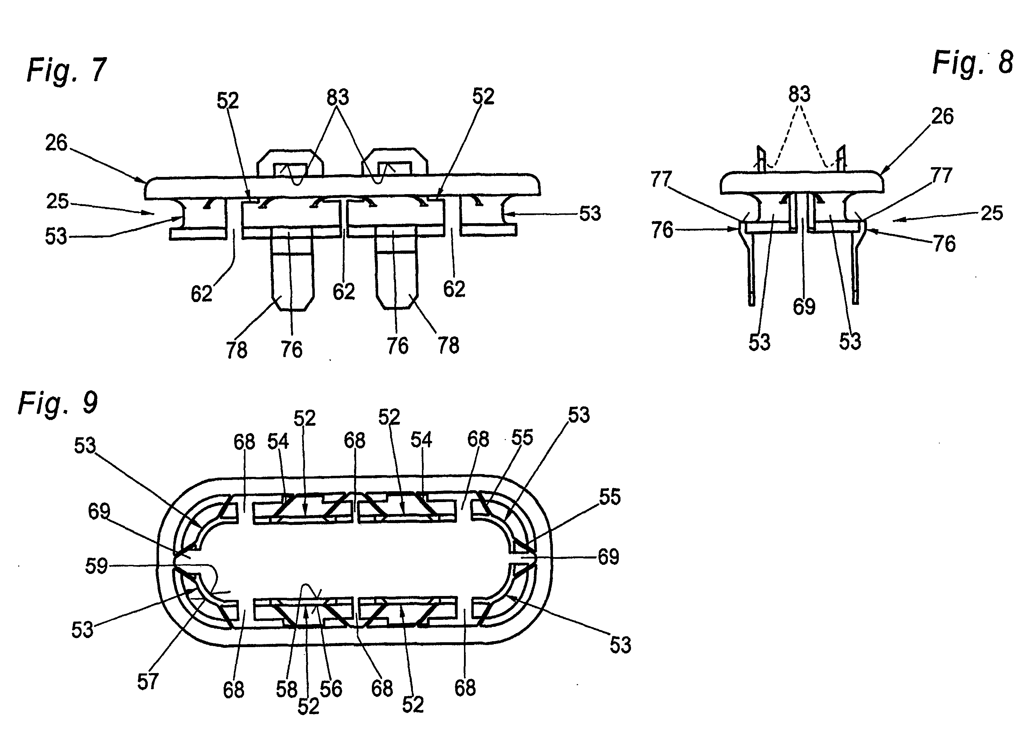

Wie vor allem aus Fig. 6 und Fig. 9 ersichtlich ist, wird der Anschlagkörper 26 durch einen in sich geschlossenen Ring gebildet. Für die einzelnen voneinander getrennten Spreizelemente 52 und 53 der Spreizvorrichtung 25 bildet der Anschlagkörper 26 zugleich einen Tragkörper, der die Spreizelemente 52 und 53 über die Verbindungsglieder 54 bzw. 55 in der richtigen axialen Position hält.

Der ringförmige Anschlagkörper 26 ist in radialer Richtung im Aufrissbereich des Flanschteils 42 des Schlauchkörpers 22 gelegen, an dem er sich spätestens dann anlegt, wenn vom Betätigungskörper 27 eine nach vorn gerichtete axiale Kraft auf den Spreizkörper 25 ausgeübt wird. Dabei stützt der Anschlagkörper 26 sich über den Flanschteil 42 am Bauteil 24 ab.

Die radiale Erstreckung des Flanschteils 42, die axiale Erstreckung des dritten Wandabschnittes 43 und die radiale Erstreckung des vierten Wandabschnittes 44 des Schlauchkopfes 22 sind auf die entsprechenden Abmessungen des Anschlagkörpers 26 abgestimmt, so dass er in dem von ihnen umgrenzten Innenraum aufgenommen und gehalten werden kann. Die Wandabschnitte des Schlauchkopfes 22 sind ausreichend elastisch, damit der Anschlagkörper 26 in diesen Innenraum hinein gebracht werden kann, der darin gewissermaßen eingeclipst wird.

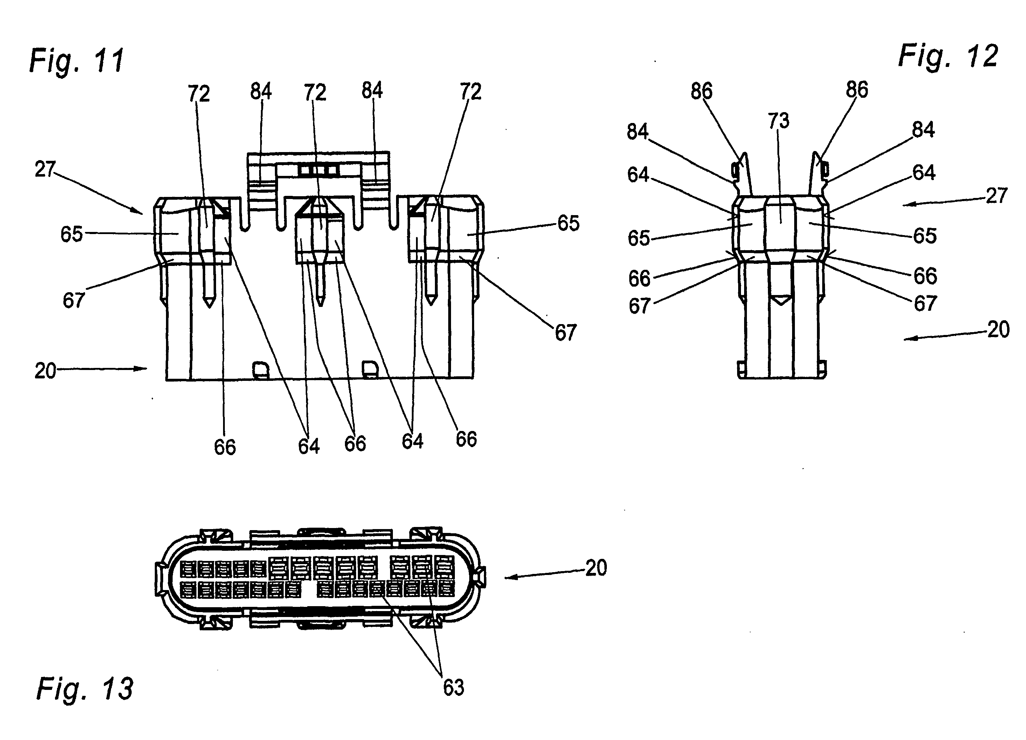

Wie aus Fig. 10 bis 13 ersichtlich ist, sind'der Stecker und die Betätigungsvorrichtung zu einer Baueinheit zusammengefasst, bei der der in Einschubrichtung vorne gelegene, in Fig. 10 rechts gelegene Teil, den Stecker 20 bildet und der hinten gelegene Teil den Betätigungskörper 27 bildet. Diese Baueinheit ist als gemeinsamer Kunststoff-Formteil hergestellt.

Die Ausbildung des Steckers 20 und seiner Zubehörteile, wie zum Beispiel einer Leiste mit Steckerstiften 63 (Fig. 13) richtet sich nach den Erfordernissen der elektrischen Leitungsverbindung und der zugehörigen Steckbuchse mit den weiterführenden Leitungen. Da es sich dabei in der Regel um Normteile handelt, sind sie zumindest zum Teil maßgeblich für die Gestaltung und Abmessungen der übrigen Teile der Abdichteinrichtung. Der Stecker 20 und der anschließende Betätigungskörper 27 werden im Schlauchkopf 22 von den Spreizelementen 52 und 53 der Spreizvorrichtung 25 axial verschieblich geführt.

Die äußeren Anlageflächen 64 und 65 am Betätigungskörper 27 einerseits und die inneren Anlageflächen 58 und 59 an der Spreizvorrichtung andererseits sind sowohl in der Längsrichtung wie auch in der Umfangsrichtung derart auf einander abgestimmt, dass in der Betriebsstellung des Betätigungskörpers die einander zugeordneten Anlageflächen einander zumindest zum Teil überdecken und dass in der Ausgangsstellung des Betätigungskörpers 27 die einander zugeordneten Anlageflächen außer Eingriff sind.

In der Ausgangs- oder Ruhestellung der Teile ist in Bezug auf eine gedachte Längsachse des Schlauchkopfes 22 der radiale Abstand der äußeren Anlageflächen 64 und 65 des Betätigungskörpers 27 um ein vorgegebenes Spreizmaß "s" größer als der radiale Abstand der damit zusammenwirkenden inneren Anlageflächen 58 und 59 der Spreizvorrichtung 25.

Damit der Betätigungskörper 27 trotz seines Übermaßes in die Spreizvorrichtung 25 eingeschoben werden kann, um die Spreizelemente 52 und 53 auseinander zu spreizen, sind beim Betätigungskörper 27 am vorderen Ende der äußeren Anlageflächen 64 und 65 Rampenflächen 66 bzw. 67 vorhanden, deren Höhe größer als das Übermaß oder Spreizmaß "s" ist.

Beim Aufspreizen der Spreizvorrichtung 25 entstehen zwischen deren einzelnen Spreizelementen 52 und 53 Umfangslücken 68 und 69, die axial ausgerichtet sind. Genau genommen sind aus fertigungstechnischen Gründen bereits im Ausgangszustand der Spreizvorrichtung 25 kleine Umfangslücken vorhanden, die sich beim Aufspreizen zu den Umfangslücken 68 und 69 vergrößern. Um im aufgespreizten Betriebszustand der Spreizvorrichtung 25 diese Umfangslücken zu überbrücken oder auszugleichen, sind am Betätigungskörper Ausgleichsleisten 72 und 73 angeordnet, und zwar in der axialen Fluchtlinie der Umfangslücken 68 bzw. 69. Die Umfangserstreckung der Ausgleichsleisten 72 und 73 ist auf die in der Betriebsstellung der Spreizvorrichtung 25 vorhandenen Umfangslücken 68 und 69 abgestimmt. Die axiale Erstreckung der Ausgleichsleisten 72 und 73 ist zumindest annähernd gleich derjenigen der äußeren Anlageflächen der Spreizelemente 52 und 53. Auf ihrer Außenseite haben die Ausgleichsleisten 72 und 73 eine äußere Anlagefläche 74 bzw. 75, die auf die äußere Anlagefläche der beiden benachbarten Spreizelemente so abgestimmt ist, dass die äußeren Anlageflächen 74 und 75 der Ausgleichsleisten eine Fortsetzung der äußeren Anlageflächen 56 und 57 der Spreizelemente 52 bzw. 53 bilden.

Auf diese Weise wird eine zumindest näherungsweise geschlossene, umlaufende äußere Anlagefläche für den ersten Wandabschnitt 41 des Schlauchkopfes 22 oder auch der inneren Auflagefläche des Druckkörpers 61 gebildet. Dadurch wird eine in Umfangsrichtung gleichmäßig gute Anlage der Dichtungsfläche 51 des ersten Wandabschnittes 41 des Schlauchkopfes 22 an der inneren Randfläche 33 des Bauteils 24 erreicht.

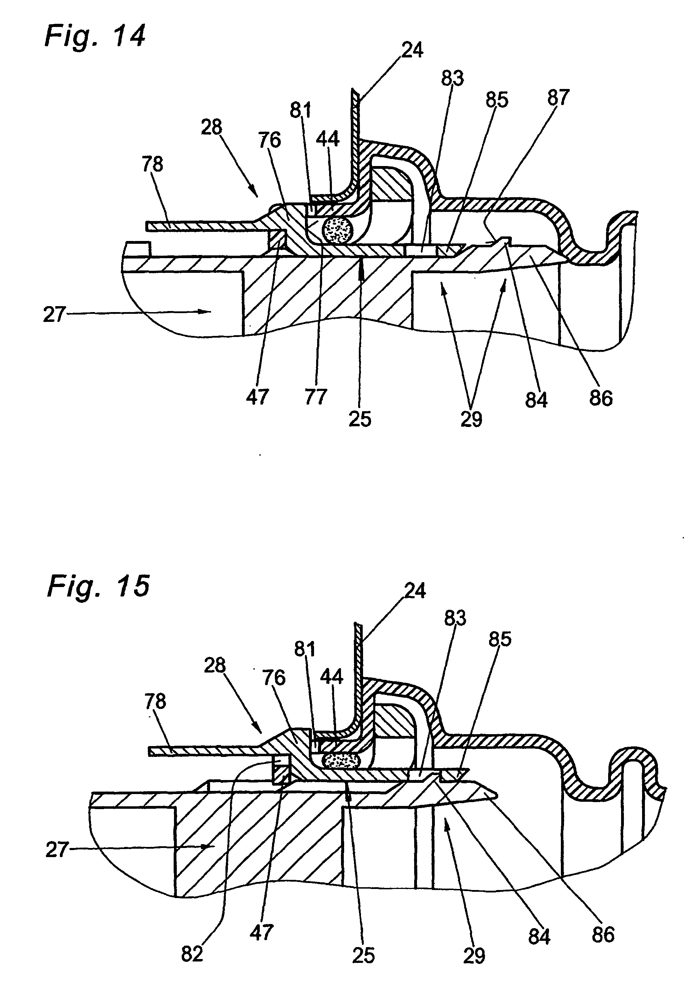

Wie aus Fig. 14 und Fig. 15 ersichtlich ist, ist mit dem vorderen Ende der Spreizvorrichtung 25 die erste Verriegelungsvorrichtung 28 verbunden, mittels der die gesamte Abdichteinrichtung am Bauteil 24 verriegelt werden kann.

Die Verriegelungsvorrichtung 28 wird durch mehrere am Umfang verteilt angeordnete, Riegelnasen 76 gebildet, deren Riegelfläche 77 rückwärts gekehrt ist. Die Riegelnasen 76 sind in axialer Richtung an einer Stelle angeordnet, die jenseits der inneren Randfläche 33 der Durchlassöffnung 31 des Bauteils 24 gelegen ist. Die Riegelnasen 76 haben eine solche radiale Erstreckung, dass sie im Ausgangszustand oder Ruhezustand der Spreizvorrichtung 25 innerhalb der Umrisslinie der Durchlassöffnung 31 stehen (Fig. 14) und dass sie im Betriebszustand der Spreizvorrichtung 25 bis in den Randbereich der Durchlassöffnung 31 hineinragen. (Fig. 15).

Wie vor allem aus Fig. 6 bis 8 ersichtlich ist, sind die Riegelnasen 76 am vorderen Ende der geraden Spreizelemente 52 angeordnet. Sie sind daran angeformt.

Am vorderen Ende, der mit einer Riegelnase 76 versehenen geraden Spreizelemente 52 ist in Fortsetzung der Riegelnase eine Betätigungszunge angeformt. Sie erstreckt sich vom Ende der Riegelnase 75 in axialer Richtung.

Da der erste Wandabschnitt 41 des Schlauchkopfes 22 sich in axialer Richtung über die gesamte Spreizvorrichtung 25 erstreckt, weist der Wandabschnitt 41 im Bereich der Riegelnase 76 eine Ausnehmung 81 auf, die auf die Riegelnase 76 abgestimmt ist, so dass die Riegelnase 76 in radialer Richtung nach außen austreten kann. Da die Betätigungszungen 78 sich von der Riegelnase 76 aus in axialer Richtung über das Ende des Schlauchkopfes 22 hinaus erstrecken, weist auch der siebte Wandabschnitt 47 im Umfangsbereich der Riegelnasen 76 und der Betätigungszungen 78 je eine Ausnehmung 82 auf.

Wie aus Fig. 14 und Fig. 15 ersichtlich ist, wirkt die zweite Verriegelungsvorrichtung 29 zwischen der Spreizvorrichtung 25 und dem Betätigungskörper 27, um beide Teile in der Betriebsstellung miteinander zu verriegeln.

Die Verriegelungsvorrichtung 29 weist zwei Paar Riegelkerben 83 und zwei Paar Riegelnasen 84 auf. Die Riegel kerben 83 werden durch den einen Wandteil einer Ausnehmung einer Riegelzunge 85 gebildet, die am Anschlagkörper 26 angeformt ist und damit auch Teil der Spreizvorrichtung 25 ist. Die Riegelnasen 84 sind an Riegelzungen 86 angeordnet, die sich vom hinteren Ende des Betätigungskörpers 27 aus axial weg erstrecken.

Die Riegelkerben 83 und die Riegelnasen 84 sind in axialer Richtung so angeordnet, dass sie in der Ausgangsstellung des Betätigungskörpers 27 außer Eingriff sind und dass sie in der Betriebsstellung des Betätigungskörpers 27 miteinander zusammenwirken.

Das Ineinandergreifen der Riegelkerben 83 und der Riegelnasen 84 wird dadurch erleichtert, dass auf der von der Riegelfläche der Riegelnasen 84 abgekehrten Seite je eine Rampenfläche 87 angeordnet ist (Fig. 14).

### Bezugszeichenliste

- 20: Stecker
- 21: Schutzschlauch
- 22: Schkauchkopf
- 23: Abdichteinrichtung
- 24: Bauteil
- 25: Spreizvorrichtung
- 26: Anschlagkörper
- 27: Betätigungskörper
- 28: Verriegelungsvorrichtung
- 29: Verriegelungsvorrichtung

- 31: Durchlassöffnung
- 32: Ziehrand
- 33: innere Randfläche

- 41: erster Wandabschnitt
- 42: zweiter Wandabschnitt
- 43: dritter Wandabschnitt
- 44: vierter Wandabschnitt
- 45: fünfter Wandabschnitt
- 46: sechster Wandabschnitt
- 47: siebter Wandabschnitt
- 48: Dichtlippe

- 51: Dichtungsfläche
- 52: Spreizelement, gerade
- 53: Spreizelement, gekrümmt
- 54: Verbindungsglieder
- 55: Verbindungsglieder
- 56: äußere Anlagefläche
- 57: äußere Anlagefläche
- 58: innere Anlagefläche
- 59: innere Anlagefläche

- 61: Druckkörper
- 62: Umfangslücken
- 63: Steckerstifte
- 64: äußere Anlageflächen
- 65: äußere Anlageflächen
- 66: Rampenflächen
- 67: Rampenflächen
- 68: Umfangslücken
- 69: Umfangslücken

- 72: Ausgleichsleisten
- 73: Ausgleichsleisten
- 74: äußere Anlageflächen
- 75: äußere Anlageflächen
- 76: Riegelnasen
- 77: Riegelfläche
- 78: Betätigungzunge

- 81: Ausnehmung
- 82: Ausnehmung
- 83: Riegelkerben
- 84: Riegelnasen
- 85: Riegelzunge
- 86: Riegelzunge
- 87: Rampenfläche

## Patentansprüche

1. Abdichteinrichtung einer Leitungsverbindung zwischen zwei relativ zu einander bewegbaren Bauteilen, insbesondere einer Karosserie und einer Tür, mit den Merkmalen:
- das eine Bauteil (24) dieser beiden Bauteile weist eine ringförmig geschlossene Durchlassöffnung (31) für eine Verbindungsleitung auf,
- die Durchlassöffnung (31) hat eine vorgegebene Umrißlinie und eine zumindest annähernd rechtwinklig zum Randbereich der Durchlaßöffnung (31) ausgerichtete innere Randfläche (33),
- es ist ein Schutzschlauch (21) vorhanden, der in seinem Inneren die Verbindungsleitung aufnimmt,
- der Schutzschlauch (21) weist wenigstens an seinem einen Ende einen Schlauchkopf (22) für den Anschluß an dem Bauteil (24) auf,
- der Schlauchkopf (22) weist wenigstens einen in Umfangsrichtung ringförmig in sich geschlossenen Wandabschnitt (41) auf,
- dieser Wandabschnitt (41) weist eine nach außen - gerichtete umlaufende Dichtungsfläche (51) auf,
- - deren äußere Umrißlinie auf die innere Umrißlinie der Durchlassöffnung (31) abgestimmt ist und
- - deren axiale Erstreckung mindestens gleich der axialen Erstreckung der Randfläche (33) der Durchlassöffnung (31) ist,
- im Schlauchkopf (22) ist eine Spreizvorrichtung (25) mit einer oder mehreren äußeren Anlageflächen (52; 53) vorhanden,
- - die im Axialbereich der Dichtungsfläche (51) des Wandabschnittes (41) des Schlauchkopfes (22) angeordnet sind,
- - die im Ruhezustand der Spreizvorrichtung (25) zumindest annähernd an die Innenseite des Wandabschnittes (41) heranreichen und
- - die bei einer Betätigung der Spreizvorrichtung (25) durch einen Betätigungskörper (27) zumindest annähernd radial auswärts bewegbar und/oder verformbar sind,
- der Betätigungskörper (27) ist,
- - im Inneren des Schlauchkopfes (22) angeordnet und
- - in axialer Richtung verschiebbar geführt,
- die Spreizvorrichtung (25) weist wenigstens eine innere Anlagefläche (58; 59) und der Betätigungskörper (27) weist wenigstens eine äußere Anlagefläche (64; 65) auf,
- - die in der Betriebsstellung des Betätigungskörpers (27) einander zumindest zum Teil überdecken und
- - die in der Ausgangsstellung des Betätigungskörpers (27) außer Eingriff sind,
- in Bezug auf eine gedachte Längsachse des Schlauchkopfes (22) ist der radiale Abstand der äußeren Anlagefläche (64; 65) des Betätigungskörpers (27) um ein vorgegebenes Spreizmaß (s) größer als der radiale Abstand der damit zusammenwirkenden inneren Anlagefläche (58; 59) der Spreizvorrichtung (25) in deren Ausgangsstellung,
- an demjenigen Ende der äußeren Anlagefläche (64; 65) des Betätigungskörpers (27) und/oder der inneren Anlagefläche der Spreizvorrichtung, das in der Ausgangsstellung des Betätigungskörpers (27) der jeweils anderen Anlagefläche (58; 59) zugekehrt ist, ist eine Rampenfläche (66 67) vorhanden, deren Höhe größer als das Spreizmaß (s) ist.

2. Abdichteinrichtung nach Anspruch 1, mit den weiteren Merkmalen:
- die innere Randfläche (33) der Durchlassöffnung (31) des Bauteils (24) wird durch die Innenfläche eines Bördelrandes oder eines in axialer Richtung tiefgezogenen Ziehrandes (32) gebildet,
- der Wandabschnitt (41) des Schlauchkopfes (22) mit der Dichtungsfläche (51) hat eine axiale Erstrekkung, die mindests gleich derjenigen des Bördelrandes oder Ziehrandes (32) ist.

3. Abdichteinrichtung nach einem der vorangehenden Ansprüche, mit den weiteren Merkmalen:
- an den ersten Wandabschnitt (41) des Schlauchkopfes (21) mit der Dichtungsfläche (51) schließt auf der dem Mittelteil des Schutzschlauches (21 ) zugekehrten Seite ein zweiter Wandabschnitt (42) an,
- - der radial auswärts gerichtet ist,
- - der flanschartig ausgebildet ist und dadurch einen Flanschteil (42) bildet,
- - der zumindest annähernd parallel zu dem ihm benachbarten Randbereich des Bauteils (24) verläuft und
- - der eine vorgegebene radiale Erstreckung hat,
- vorzugsweise ist an der dem Bauteil (24) zugekehrten Seite des Flanschteils (42) im Randbereich der Durchlassöffnung (31) eine umlaufende Dichtlippe (48) angeordnet, insbesondere daran angeformt.

4. Abdichteinrichtung nach Anspruch 3, mit den weiteren Merkmalen:
- im Schlauchkopf (22) ist wenigstens ein Anschlagkörper (26) vorhanden,
- - der auf der dem Mittelteil des Schutzschlauches (22) zugekehrten Seite des Flanschteils (42) angeordnet ist,
- - der in radialer Richtung zumindest zum Teil in den Aufrißbereich des Flanschteils (42) hineinragt und
- - der mit der Spreizvorrichtung (25) in axialer Richtung unverschieblich verbunden ist,

5. Abdichteinrichtung nach Anspruch 4, mit den weiteren Merkmalen:
- der Anschlagkörper (26) wird durch einen in sich geschlossenen Ring gebildet, der zumindest abschnittsweise, vorzugsweise ringsum, in radialer Richtung in den Aufrißbereich des Flanschteils (42) des Schlauchkopfes (22) hineinragt,
- am Außenrand des Flanschteils (42) schließt ein dritter Wandabschnitt (43) des Schlauchkopfes (22) an,
- - dessen innere Umrißlinie mindestens die gleiche Weite wie die äußere Umrißlinie des Anschlagkörpers (26) hat und
- - der eine axiale Erstreckung hat, die auf die axiale Erstreckung des Anschlagkörpers (26) abgestimmt ist,
- vorzugsweise schließt an den dritten Wandabschnitt (43) ein vierter Wandabschnitt (44) an,
- - der zumindest näherungsweise radial einwärts gerichtet ist und
- - der sich so weit verengt, dass seine verbleibende lichte Weite zumindest zum Teil kleiner als die radiale Abmessung des Anschlagkörpers (26) ist.

6. Abdichteinrichtung nach Anspruch 5, mit den weiteren Merkmalen:
- an den vierten Wandabschnitt (44) des Schlauchkopfes (22) schließt ein fünfter Wandabschnitt (45) an,
- - dessen innere Umrißlinie mindestens die gleiche Weite wie die äußere Umrißlinie des Betätigungskörpers (27) hat und
- - der eine axiale Erstreckung hat, die auf die axiale Erstreckung des Betätigungskörpers (27) und seines Bewegungsraumes abgestimmt ist,
- vorzugsweise schließt an den fünften Wandabschnitt (45) ein sechster Wandabschnitt (46) an,
- - der zumindest näherungsweise radial einwärts gerichtet ist und
- - der sich so weit verengt, dass seine verbleibende lichte Weite zumindest zum Teil kleiner als die radiale Abmessung des Betätigungskörpers (26) ist.

7. Abdichteinrichtung nach einem der vorangehenden Ansprüche, mit den weiteren Merkmalen:
- am Schlauchkopf (22) schließt am ersten Wandabschnitt (41) auf der vom Mittelteil des Schutzschlauches (22) abgekehrten Seite ein weiterer Wandabschnitt (47) an,
- - der radial einwärts gerichtet ist,
- - der flanschartig ausgebildet ist und einen zweiten Flanschteil (47) bildet, und
- - der eine vorgegebene radiale Erstreckung hat.

8. Abdichteinrichtung nach einem der vorangehenden Ansprüche, mit den weiteren Merkmalen:
- die Spreizvorrichtung wird durch einen in sich geschlossenen Spreizring gebildet, der aus einem elastischen Werkstoff hergestellt ist,
- der Betätigungskörper weist an seinem dem Spreizring zugekehrten Ende eine umlaufende äußere Rampenfläche auf, an die sich eine ebenfalls umlaufende äußere Anlagefläche für den Spreizring anschließt,
- die Höhe der Rampenfläche und der Anlagefläche sind auf das Spreizmaß und auf die Elastizität des Werkstoffes des Spreizringes abgestimmt.

9. Abdichteinrichtung nach einem der Ansprüche 4-6, mit den weiteren Merkmalen:
- die Spreizvorrichtung (25) weist mehrere in Umfangsrichtung nebeneinander angeordnete Spreizelemente (52; 53) auf,
- - die durch elastische Verbindungsglieder (54; 55) mit dem Anschlagkörper (26) in radialer Richtung nachgiebig und in axialer Richtung unverschieblich verbunden sind und
- - die wenigstens eine äußere Anlagefläche (56; 57) aufweisen, die auf den ihr zugekehrten Flächenabschnitt der Innenseite des ersten Wandabschnittes (41) des Schlauchkopfes (22) abgestimmt ist,
- jedes Spreizelement (52; 53) weist wenigstens eine der inneren Anlageflächen (58; 59) auf, die auf die äußere Anlagefläche (64; 65) des Betätigungskörpers (27) abgestimmt ist.

10. Abdichteinrichtung nach Anspruch 9, mit den weiteren Merkmalen:
- am Betätigungskörper (27) sind Ausgleichsleisten (72; 73) vorhanden,
- - die vorzugsweise am Betätigungskörper (27) angeformt sind,
- - die in der axialen Fluchtlinie der Umfangslücken (68; 69) zwischen je zwei einander benachbarten Spreizelementen (52; 53) angeordnet sind,
- - die auf ihrer Außenseite eine Anlagefläche (74; 75) aufweisen, die auf die äußere Anlagefläche (58; 59) der beiderseits benachbarten Spreizelemente (52; 53) abgestimmt ist,
- - deren Umfangserstreckung zumindest zum Teil auf die in der Betriebsstellung der Spreizelemente (52; 53) vorhandene Umfangserstreckung deren Umfangslücken (68; 69) abgestimmt ist,
- - deren axiale Erstreckung zumindest annähernd gleich derjenigen der äußeren Anlageflächen (56; 57) der Spreizelemente (52; 53) ist und
- - die in axialer Richtung so angeordnet sind, dass sie in der Betriebsstellung des Betätigungskörpers (27) zumindest annähernd im gleichen axialen Bereich wie die äußeren Anlageflächen (58; 59) der Spreizelemente (52; 53) gelegen sind.

11. Abdichteinrichtung nach einem der vorangehenden Ansprüche, mit den weiteren Merkmalen:
- im axialen Bereich des ersten Wandabschnittes (41) des Schlauchkopfes (22) ist zwischen dessen Innenseite und der Spreizvorrichtung(25) ein Druckkörper (61) angeordnet,
- - der vorzugsweise ringförmig in sich geschlossen ausgebildet ist und
- - der aus einem elastischen Werkstoff hergestellt ist.

12. Abdichteinrichtung nach Anspruch 9, mit den weiteren Merkmalen:
- mit der Spreizvorrichtung (25) ist eine Verriegelungsvorrichtung (28) verbunden, mittels der die Abdichteinrichtung (23) mit dem Bauteil (24) in axialer Richtung verriegelbar ist,
- vorzugsweise wird die Verriegelungsvorrichtung (28) durch wenigstens eine Riegelnase oder durch mehrere am Umfang verteilt angeordnete Riegelnasen (76) gebildet,
- - deren Riegelfläche (77) in axialer Richtung an einer Stelle angeordnet ist, die jenseits der inneren Randfläche (33) der Durchlassöffnung (31) am Bauteil (24) gelegen ist und
- - die eine solche radiale Erstreckung haben, dass sie im Ausgangszustand der Spreizvorrichtung (25) innerhalb der Umrißlinie der Durchlass - öffnung (31) gelegen ist und dass sie im Betriebszustand der Spreizvorrichtung (25) bis in den Randbereich der Durchlassöffnung (31) hinaus ragen,
- soweit der erste Wandabschnitt (41) des Schlauchkopfes (22) sich bis in den axialen Bereich der Riegelnasen (76) hinein erstreckt, ist er mit Ausnehmungen (81) versehen, die auf die Riegelnasen (76) abgestimmt sind,
- vorzugsweise sind die Riegelnasen (76) am vorderen Ende eines Spreizelementes (52) angeordnet.

13. Abdichteinrichtung nach Anspruch 12, mit dem weiteren Merkmal:
- am vorderen Ende eines jeden mit einer Riegelnase (76) versehenen Spreizelementes (52) ist je eine Betätigungszunge (78) angeordnet, vorzugsweise daran angeformt.

14. Abdichtungseinrichtung nach Anspruch 13 in Verbindung mit Anspruch 7, mit dem weiteren Merkmal:
- in der Fluchtlinie der Betätigungszunge (78) ist der radial einwärts gerichtete Wandabschnitt (47) des Schlauchkopfes (22) mit einer Ausnehmung (81) für die Betätigungszunge (78) versehen, deren lichte Abmessungen auf den Bewegungsraum der Betätigungszunge (78) abgestimmt sind.

15. Abdichteinrichtung nach einem der vorangehenden Ansprüche, mit den weiteren Merkmalen:
- ein mit der Verbindungsleitung verbundener Steckerteil (20) ist so ausgebildet und angeordnet, dass er als Betätigungskörper (27) für die Spreizvorrichtung (25) einsetzbar ist.

16. Abdichteinrichtung nach einem der vorangehenden Ansprüche, mit den weiteren Merkmalen:
- es ist eine Verriegelungsvorrichtung (29) mit wenigstens einer Riegelkerbe (83) und einer Riegelnase (84) vorhanden,
- - die in radialer Richtung relativ zu einander elastisch bewegbar sind,
- - von denen der eine Teil (83) mit der Spreizvorrichtung(25) verbunden ist und
- - von denen der andere Teil (84) mit dem Betätigungskörper (27) verbunden ist,
- vorzugsweise sind die Riegelkerbe (83) und/oder die Riegelnase (84) an einer elastischen Zunge (85; 86) angeordnet,
- die Riegelkerbe(n) (83) und die Riegelnase (n) (84) sind in axialer Richtung so angeordnet,
- - dass sie in der Ausgangsstellung des Betätigungskörpers (27) außer Eingriff sind und
- - dass sie in der Betriebsstellung des Betätigungskörpers (27) miteinander zusammenwirken.

## Claims

1. A sealing device of a cable connection between two components which are movable relative to one another, particularly a vehicle body and a door, comprising the features:
- one component (24) of these two components has a passage opening (31) for a connection cable, which is closed in a ring shape,
- the passage opening (31) has a prescribed outline and an interior marginal surface (33) oriented at least approximately at right angles to the marginal region of the passage opening (31),
- there is a protective flexible tube (21) which houses the connection cable in its interior,
- the protective flexible tube (21) has a tube head (22) at least at one end for the attachment to the component (24),
- the tube head (22) has at least one wall portion (41) which forms a ring shape, closed on itself, in the peripheral direction,
- this wall portion (41) has an outwardly directed circular sealing surface (51)
- - the exterior outline of which is adapted to the interior outline of the passage opening (31), and
- - the axial extent of which is at least equal to the axial extent of the marginal surface (33) of the passage opening (31),
- there is an expanding device (25) in the tube head (22), comprising one or more exterior abutment surfaces (52; 53),
- - which are arranged in the axial region of the sealing surface (51) of the wall portion (41) of the tube head (22),
- - which extend at least approximately up to the interior side of the wall portion (41), in the inoperative position of the expanding device (25), and
- - which are movable and/or deformable at least approximately radially outwards upon actuation of the expanding device (25) by means of an actuating body (27),
- the actuating body (27) is
- - arranged in the interior of the tube head (22), and
- - is displaceably guided in the axial direction,
- the expanding device (25) has at least one interior abutment surface (58; 59) and the actuating body (27) has at least one exterior abutment surface (64; 65),
- - which at least partially overlap one another in the operating position of the actuating body (27), and
- - which are disengaged in the initial position of the actuating body (27),
- with reference to an imaginary longitudinal axis of the tube head (22), the radial distance of the exterior abutment surface (64; 65) of the actuating body (27) is greater by a prescribed expansion measurement (s) than the radial distance of the interior abutment surface (58; 59) of the expansion device (25) cooperating therewith, in the initial position thereof,
- there is a ramp surface (66; 67) at the end of the exterior abutment surface (64; 65) of the actuating body (27) and/or of the interior abutment surface of the expansion device, which is directed towards the respective other abutment surface (58; 59) in the initial position of the actuating body (27), the height of the said ramp surface being greater than the expansion measurement (s).

2. A sealing device according to Claim 1, comprising the further features:
- the interior marginal surface (33) of the passage opening (31) of the component (24) is formed by the interior surface of a flange edge or a drawn edge (32) deep-drawn in the axial direction,
- the wall portion (41) of the tube head (22) comprising the sealing surface (51) has an axial extent which is at least equal to that of the flange edge or the drawn edge (32).

3. A sealing device according to one of the preceding claims, comprising the further features:
- the first wall portion (41) of the tube head (21) [sic, recte 22] comprising the sealing surface (51) is adjoined on the side directed towards the middle part of the protective flexible tube (21) by a second wall portion (42)
- - which is directed radially outwards,
- - which is flange-like in design and thereby forms a flange part (42),
- - which extends at least approximately parallel to the marginal region of the component (24) adjacent thereto, and
- - which has a prescribed radial extent,
- a circular sealing lip (48) is preferably arranged on the side of the flange part (42) directed towards the component (24), in particular is moulded thereto, in the marginal region of the passage opening (31).

4. A sealing device according to Claim 3, comprising the further features:
- there is at least one stop body (26) in the tube head (22),
- - which is arranged on the side of the flange part (42) directed towards the middle part of the protective flexible tube (22),
- - which projects in the radial direction at least partially into the perpendicular section region of the flange part (42), and
- - which is connected to the expansion device (25) so as to be immovable in the axial direction.

5. A sealing device according to Claim 4, comprising the further features:
- the stop body (26) is formed by a ring, closed on itself, which projects at least in parts, preferably all the way round, in the radial direction into the perpendicular section region of the flange part (42) of the tube head (22),
- the exterior edge of the flange part (42) is adjoined by a third wall portion (43) of the tube head (22),
- - the interior outline of which has at least the same width as the exterior outline of the stop body (26), and
- - which has an axial extent which is adapted to the axial extent of the stop body (26),
- the third wall portion (43) is preferably adjoined by a fourth wall portion (44)
- - which is directed at least approximately radially inwards, and
- - which narrows to such an extent that its remaining inside width is at least in part smaller than the radial dimension of the stop body (26).

6. A sealing device according to Claim 5, comprising the further features:
- the fourth wall portion (44) of the tube head (22) is adjoined by a fifth wall portion (45),
- - the interior outline of which has at least the same width as the exterior outline of the actuating body (27), and
- - which has an axial extent which is adapted to the axial extent of the actuating body (27) and its area of movement,
- the fifth wall portion (45) is preferably adjoined by a sixth wall portion (46),
- - which is directed at least approximately radially inwards, and
- - which narrows to such an extent that its remaining inside width is at least in part smaller than the radial dimension of the actuating body (26).

7. A sealing device according to one of the preceding claims, comprising the further features:
- on the tube head (22) the first wall portion (41) is adjoined on the side remote from the middle part of the protective flexible tube (22) by a further wall portion (47)
- - which is directed radially inwards,
- - which is designed in the manner of a flange and forms a second flange part (47), and
- - which has a prescribed radial extent.

8. A sealing device according to one of the preceding claims, comprising the further features:
- the expansion device is formed by an expansion ring, closed on itself, manufactured from a resilient material,
- the actuating body has a circular exterior ramp surface at its end directed towards the expansion ring, which is adjoined by a similarly circular exterior abutment surface for the expansion ring,
- the height of the ramp surface and the height of the abutment surface are adapted to the expansion measurement and to the resilience of the material of the expansion ring.

9. A sealing device according to one of Claims 4 - 6, comprising the further features:
- the expansion device (25) has several expansion elements (52; 53) arranged side by side in the peripheral direction,
- - which are connected to the stop body (26) by means of resilient connecting elements (54; 55) so as to be flexible in the radial direction and immovable in the axial direction, and
- - which have at least one exterior abutment surface (56; 57) which is adapted to the surface portion, directed towards the said abutment surface, of the interior side of the first wall portion (41) of the tube head (22),
- each expansion element (52; 53) has at least one of the interior abutment surfaces (58; 59) which is adapted to the exterior abutment surface (64; 65) of the actuating body (27).

10. A sealing device according to Claim 9, comprising the further features:
- there are compensating strips (72; 73) on the actuating body (27),
- - which are preferably moulded to the actuating body (27),
- - which are arranged in the axial line of alignment of the peripheral gaps (68; 69) between each two mutually adjacent expansion elements (52; 53),
- - which have an abutment surface (74; 75) on their exterior side which is adapted to the exterior abutment surface (58; 59) of the expansion elements (52; 53) adjacent thereto on either side,
- - the peripheral extent of which is adapted at least in part to the peripheral extent of the peripheral gaps (68; 69), thereof, present in the operating position of the expansion elements (52; 53),
- - the axial extent of which is at least approximately equal to that of the exterior abutment surfaces (56; 57) of the expansion elements (52; 53), and
- - which are arranged in the axial direction such that, in the operating position of the actuating body (27), they are located at least approximately in the same axial region as the exterior abutment surfaces (58; 59) of the expansion elements (52; 53).

11. A sealing device according to one of the preceding claims, comprising the further features:
- a pressure body (61) is arranged in the axial region of the first wall portion (41) of the tube head (22) between the interior side thereof and the expansion device (25),
- - which is preferably designed so as to form a ring shape, closed on itself, and
- - which is manufactured from a resilient material.

12. A sealing device according to Claim 9, comprising the further features:
- a locking device (28) is connected to the expansion device (25), by means of which the sealing device (23) may be locked with the component (24) in the axial direction,
- the locking device (28) is preferably formed by at least one locking projection or several locking projections (76) arranged distributed on the periphery,
- - the locking surface (77) of which is arranged in the axial direction in a position located beyond the interior marginal surface (33) of the passage opening (31) on the component (24), and
- - which have a radial extent such that, in the initial state of the expansion device (25), they are located within the outline of the passage opening (31) and, in the operating state of the expansion device (25), they extend out into the marginal region of the passage opening (31),
- if the first wall portion (41) of the tube head (22) extends into the axial region of the locking projections (76), it is provided with recesses (81) which are adapted to the locking projections (76),
- the locking projections (76) are preferably arranged at the front end of an expansion element (52).

13. A sealing device according to Claim 12, comprising the further feature:
- respective actuating tongues (78) are arranged at the front end of each expansion element (52) provided with a locking projection (76), preferably moulded thereto.

14. A sealing device according to Claim 13 in conjunction with Claim 7, comprising the further feature:
- in the line of alignment of the actuating tongue (78), the radially inwardly directed wall portion (47) of the tube head (22) is provided with a recess (81) for the actuating tongue (78), the inside dimensions of which are adapted to the area of movement of the actuating tongue (78).

15. A sealing device according to one of the preceding claims, comprising the further features:
- a plug part (20) connected to the connecting cable is designed and arranged such that it may be used as actuating body (27) for the expansion device (25).

16. A sealing device according to one of the preceding claims, comprising the further features:
- there is a locking device (29), comprising at least one locking notch (83) and one locking projection (84),
- - which are resiliently movable relative to one another in the radial direction,
- - one part (83) of which is connected to the expansion device (25), and
- - the other part (84) of which is connected to the actuating body (27),
- the locking notch (83) and/or the locking projection (84) are preferably arranged on a resilient tongue (85; 86),
- the locking notch(es) (83) and the locking projection(s) (84) are arranged in the axial direction such
- - that they are disengaged in the initial position of the actuating body (27), and
- - that they cooperate with one another in the operating position of the actuating body (27).

## Revendications

1. Dispositif d'étanchéité d'une connexion de conduite entre deux pièces mobiles relativement l'une par rapport à l'autre, en particulier entre une carrosserie et une portière,
**caractérisée en ce que**
- une pièce (24) parmi ces deux pièces comporte un orifice de passage (31) annulaire fermé pour une conduite de liaison,
- l'orifice de passage (31) a une ligne de contour prédéfinie et une surface de bord intérieure (33) dirigée au moins sensiblement à angle droit par rapport à la zone de bord de l'orifice de passage (31),
- un tuyau de protection (21) qui reçoit la conduite de liaison,
- le tuyau de protection (21) comporte au moins à l'une de ses extrémités une tête (22) pour être raccordée à la pièce (24),
- la tête (22) du tuyau comporte au moins un segment de paroi (41) fermé, de forme annulaire, au moins dans la direction périphérique,
- ce segment de paroi (41) comporte une surface d'étanchéité (51) périphérique dirigée vers l'extérieur et
* sa ligne de contour extérieur est accordée sur la ligne de contour intérieur de l'orifice de passage (31),
* son extension axiale est au moins égale à l'extension axiale de la surface de bord (33) de l'orifice de passage (31),
- la tête (22) comporte un dispositif d'écartement (25) ayant une ou plusieurs surfaces d'appui extérieures (52, 53),
* ces surfaces sont prévues dans la zone axiale de la surface d'étanchéité (51) du segment de paroi (41) de la tête de tuyau (22),
* ces surfaces arrivent en position de repos du dispositif d'écartement (25) au moins sensiblement contre le côté intérieur du segment de paroi (41), et
* ces surfaces peuvent être déplacées et/ou déformées au moins sensiblement radialement vers l'extérieur lorsqu'on actionne le dispositif d'écartement (25) par un organe d'actionnement (27),
- l'organe d'actionnement (27) est
* prévu à l'intérieur de la tête de tuyau (22), et
* guidé en coulissement dans la direction axiale,
- le dispositif d'écartement (25) comporte au moins une surface d'appui intérieure (58, 59) et l'organe d'actionnement (27) comporte au moins une surface d'appui extérieure (64, 65),
* ces surfaces se chevauchent au moins partiellement lorsque l'organe d'actionnement (27) est en position active, et
* ces surfaces sont hors de prise lorsque l'organe d'actionnement (27) est en position de repos,
- par rapport à l'axe géométrique de la tête de tuyau (22), lorsque le dispositif d'écartement (25) est au repos, la distance radiale entre la surface d'appui extérieure (64, 65) de l'organe d'actionnement (27) dépasse d'une distance d'écartement prédéfinie (s) la distance radiale de la surface d'appui intérieure (58, 59) du dispositif d'écartement (25) avec laquelle elle coopère, lorsque le dispositif d'écartement est en position de repos,
- l'extrémité correspondante de la surface d'appui extérieure (64, 65) de l'organe d'actionnement (27) et/ou la surface d'appui intérieure du dispositif d'écartement tournée en position de repos de l'organe d'actionnement (27) contre l'autre surface d'appui respective (58, 59) comporte une surface formant rampe (66, 67) dont la hauteur est supérieure à la distance d'écartement (s).

2. Installation d'étanchéité selon la revendication 1,
**caractérisée en ce que**
- la surface de bord intérieure (33) de l'orifice de passage (31) de la pièce (24) est formé par la surface intérieure d'un bord de sertissage ou d'un bord étiré (32) obtenu par étirage poussé dans la direction axiale,
- le segment de paroi (41) de la tête de tuyau (22) comportant la surface d'étanchéité (51) a une extension axiale au moins égale à celle du bord de sertissage ou du bord étiré (32).

3. Installation d'étanchéité selon l'une des revendications 1 et 2,
**caractérisée en ce que**
- le premier segment de paroi (41) de la tête de tuyau (21) vient par la surface d'étanchéité (51) contre le côté d'un second segment de paroi (42) prévu sur la partie centrale du tuyau de protection (21), ce second segment de paroi
* est dirigé radialement vers l'extérieur
* est en forme de bride et constitue ainsi une partie de bride (42),
* est au moins sensiblement parallèle à la zone de paroi voisine de la pièce (24) et
* a une extension radiale prédéfinie
- de préférence le côté de la partie de bride (42) tourné vers la pièce (24) comporte dans la zone de bord de l'orifice de passage (31) une lèvre d'étanchéité (48) périphérique notamment formée sur ce bord.

4. Installation d'étanchéité selon la revendication 3,
**caractérisée en ce que**
- la tête de tuyau (22) comporte au moins un organe de butée (26)
* prévu sur le côté de la pièce formant bride (42) tourné vers la partie centrale du tuyau de protection (22),
* pénètre dans la direction radiale au moins en partie dans la zone de contour de la partie de bride (42), et
* est bloqué en coulissement dans la direction axiale par rapport au dispositif d'écartement (25).

5. Installation d'étanchéité selon la revendication 4,
**caractérisée en ce que**
- l'organe de butée (26) est formé par un anneau fermé qui pénètre au moins par segments de préférence de façon annulaire dans la direction radiale dans la zone de contour de la pièce formant bride (42) de la tête de tuyau (22),
- le bord extérieur de la partie de bride (42) est relié à un troisième segment de paroi (43) de la tête de tuyau (22)
* dont la ligne de contour intérieur a au moins la même extension que la ligne de contour extérieur de l'organe de butée (26), et
* il a une extension axiale correspondant à l'extension axiale de l'organe de butée (26),
- de préférence un quatrième segment de paroi (44) fait suite au troisième segment de paroi (43) et ce quatrième segment de paroi (44)
* est dirigé au moins sensiblement radialement vers l'intérieur, et
* ce segment de paroi se rétrécit pour que la distance libre qui subsiste soit au moins en partie inférieure à la dimension radiale de l'organe de butée (26).

6. Installation d'étanchéité selon la revendication 5,
**caractérisée en ce que**
- le quatrième segment de paroi (44) de la tête de tuyau (22) se poursuit par un cinquième segment de paroi (45)
* dont la ligne de contour intérieur a au moins la même ouverture que la ligne de contour extérieur de l'organe d'actionnement (27), et
* ce segment a une extension axiale correspondant à l'extension axiale de l'organe d'actionnement (27) et de son espace de mouvement,
- le cinquième segment de paroi (45) se poursuit de préférence par un sixième segment de paroi (46)
* dirigé au moins sensiblement radialement vers l'intérieur, et
* se rétrécissant pour que son ouverture libre qui subsiste soit au moins en partie inférieure à la dimension radiale de l'organe d'actionnement (26).

7. Installation d'étanchéité selon l'une des revendications 1 à 6,
**caractérisée en ce que**
- la tête de tuyau (22) est reliée à un premier segment de paroi (41) dont le côté opposé à la partie centrale du tuyau de protection (22) comporte un autre segment de paroi (47)
* dirigé radialement vers l'intérieur,
* en forme de bride et constituant une seconde partie de bride (47), et
* ayant une extension radiale prédéfinie.

8. Installation d'étanchéité selon l'une quelconque des revendications 1 à 7,
**caractérisée en ce que**
- le dispositif d'écartement est formé par un anneau d'écartement fermé, réalisé en une matière élastique,
- l'organe d'actionnement comporte à son extrémité tournée vers l'anneau d'écartement, une surface de rampe extérieure périphérique qui se poursuit par une surface d'appui extérieure également périphérique pour l'anneau d'écartement,
- la hauteur de la surface de rampe et de la surface d'appui sont accordées sur le degré d'écartement et sur l'élasticité de la matière de l'anneau d'écartement.

9. Installation d'étanchéité selon l'une quelconque des revendications 4 à 6,
**caractérisée en ce que**
- le dispositif d'écartement (25) comporte plusieurs éléments d'écartement (52, 53) juxtaposés dans la direction périphérique,
* ces éléments sont reliés par des éléments de liaison élastiques (54, 55) à l'organe de butée (26) en étant souples dans la direction radiale et bloqués dans la direction axiale et
* ils ont au moins une surface d'appui extérieure (56, 57) définie en fonction du segment de surface du côté intérieur du premier segment de paroi (41) de la tête de tuyau (22),
- chaque élément d'écartement (52, 53) comporte au moins l'une des surfaces d'appui intérieures (58, 59) accordée suivant la surface d'appui extérieure (64, 65) de l'organe d'actionnement (27).

10. Installation d'étanchéité selon la revendication 9,
**caractérisée en ce que**
- l'organe d'actionnement (27) comporte des longerons de compensation (72, 73)
* formés de préférence sur l'organe d'actionnement (27),
* prévus dans l'alignement axial des intervalles périphériques (68, 69) entre chaque fois deux éléments d'écartement voisins (52, 53)
* ayant sur leur côté extérieure une surface d'appui (74, 75) accordée sur la surface d'appui extérieure (58, 59) des deux éléments d'écartement voisins (52, 53),
* dont l'extension périphérique est accordée au moins en partie sur l'extension périphérique des intervalles périphériques (68, 69) qui existent lorsque les éléments d'écartement (52, 53) sont en position active,
* dont l'extension axiale est au moins sensiblement égale à celle des surfaces d'appui extérieures (56, 57) des éléments d'écartement (52, 53), et
* qui sont disposées dans la direction axiale pour qu'en position active de l'organe d'actionnement (27) elles soient situées au moins sensiblement dans la même zone axiale que les surfaces d'appui extérieures (58, 59) des éléments d'écartement (52, 53).

11. Installation d'étanchéité selon l'une des revendications précédentes,
**caractérisée en ce que**
- dans la zone axiale du premier segment de paroi (41) de la tête de tuyau (22), il est prévu un organe de poussée (61) entre son côté intérieur et le dispositif d'écartement (25),
* celui-ci est de préférence de forme annulaire fermée, et
* il est réalisé en une matière élastique.

12. Installation d'étanchéité selon la revendication 9,
**caractérisée en ce que**
- un dispositif de verrouillage (28) est relié au dispositif d'écartement (25) pour verrouiller l'installation d'étanchéité (23) à la pièce (24) dans la direction axiale,
- le dispositif de verrouillage (28) est formé par au moins un bec de verrouillage ou plusieurs becs de verrouillage (76) répartis à la périphérie
* dont la surface de verrouillage (77) est prévue dans la direction axiale à un endroit situé de l'autre côté de la surface de bord intérieur (33) de l'orifice de passage (31) sur la pièce (24), et
* ayant une extension axiale telle qu'en position de repos du dispositif d'écartement (25) elle se situe à l'intérieur de la ligne de contour de l'orifice de passage (31) et qu'en position active du dispositif d'écartement (25) elle arrive jusque dans la zone de bord de l'orifice de passage (31),
- aussi loin que le premier segment de paroi (41) de la tête de tuyau (22) s'étend dans la zone axiale des becs de verrouillage (76) il comporte des cavités (81) correspondant aux becs de verrouillage (76),
- les becs de verrouillage (76) sont prévus de préférence à l'extrémité avant d'un élément d'écartement (52).

13. Installation d'étanchéité selon la revendication 12,
**caractérisée en ce que**
- l'extrémité avant de chaque élément d'écartement (52) muni d'un bec de verrouillage (76) comporte une languette d'actionnement respective (78), de préférence formée sur le bec.

14. Installation d'étanchéité selon la revendication 13 prise en combinaison avec la revendication 7,
**caractérisée en ce que**
- dans l'alignement de la languette d'actionnement (78), le segment de paroi (47) de la tête de tuyau (22) dirigé radialement vers l'intérieur est muni d'une cavité (81) pour la languette d'actionnement (78) dont les dimensions libres correspondent à l'espace de mouvement de la languette d'actionnement (78).

15. Installation d'étanchéité selon l'une des revendications précédentes,
**caractérisée en ce qu'**
- un connecteur (20) relié à la conduite de liaison est réalisé et installé pour servir d'organe d'actionnement (27) pour le dispositif d'écartement (25).

16. Installation d'étanchéité selon l'une des revendications précédentes,
**caractérisée en ce qu'**
- il comporte un dispositif de verrouillage (29) muni d'au moins une encoche de verrouillage (83) et d'un bec de verrouillage (84)
* mobiles élastiquement l'un par rapport à l'autre dans la direction radiale
* dont une partie (83) est relié au dispositif d'écartement (25), et
* dont l'autre partie (84) est reliée à l'organe d'actionnement (27),
- de préférence l'encoche de verrouillage (83) et/ou le bec de verrouillage (84) sont prévus sur une languette élastique (85, 86),
- la ou les encoches de verrouillage (83) et le ou les becs de verrouillage (84) sont installés dans la direction axiale pour
* être hors de prise lorsque l'organe d'actionnement (27) est en position de repos,
* coopérer lorsque l'organe d'actionnement (27) est en position active.
